Europäisches Patentamt

European Patent Office

Office européen des brevets

(19)

(11) Veröffentlichungsnummer: **0 280 063 B1**

(12) **EUROPÄISCHE PATENTSCHRIFT**

(45) Veröffentlichungstag der Patentschrift: **27.12.91**

(51) Int. Cl.⁵: **B01D 29/50**, B01D 35/22

(21) Anmeldenummer: **88101293.4**

(22) Anmeldetag: **29.01.88**

(54) **Verfahren und Vorrichtung zur Verbesserung der Restvolumenfiltration in einem Filter.**

(30) Priorität: **03.02.87 CH 383/87**

(43) Veröffentlichungstag der Anmeldung:
**31.08.88 Patentblatt 88/35**

(45) Bekanntmachung des Hinweises auf die
Patenterteilung:
**27.12.91 Patentblatt 91/52**

(84) Benannte Vertragsstaaten:
**CH DE FR GB IT LI**

(56) Entgegenhaltungen:
**EP-A- 0 025 628**
**US-A- 4 446 030**

(73) Patentinhaber: **DrM, Dr. Müller AG**
**Alte Landstrasse 421**
**CH-8708 Männedorf ZH(CH)**

(72) Erfinder: **Schumacher, Ivo**
**Zürcherstrasse 178**
**CH-8645 Jona(CH)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Verfahren zur Filtration eines Restvolumens in einem Filterbehälter mit hängend angeordneten Filterelementen, wobei die Suspension eines Restvolumens mittels einer Düse im oberen Teil eines Filterbehälters versprüht wird, sowie ein Filterelement zur Durchführung des Verfahrens.

Ein Verfahren der Art ist aus der EP-A-O 155 347 bekannt. Danach wird ein Restvolumen, bestehend aus einer unfiltrierten Suspension, aus dem unteren Teil eines Filterbehälters mittels einer Pumpe abgesaugt und im Kopf des Filterbehälters oberhalb der Filterelemente in den Behälterraum versprüht. Bei der auf diese Weise durchgeführten Filtration des Restvolumens wird so lange umgepumpt bis sich keine Flüssigkeit mehr auf dem Boden des Filterbehälters sammelt.

Obwohl mit diesem Verfahren, bei ausreichend langem Umpumpen, das Restvolumen filtriert werden kann, erfordert die vollständige Entfernung der Restvolumenflüssigkeit relativ viel Zeit. Es wurde festgestellt, dass jeweils etwa 1/3 der umgepumpten Flüssigkeit als Klarfiltrat den Filterbehälter verlässt und 2/3 der Suspension zum Behälterboden zurückfliesst.

Als Nachteil des bekannten Verfahrens resultieren zu lange Standzeiten eines Filtrationszyklusses, durch das Umpumpen ein zu hoher Energieaufwand und ein relativ hoher Gasverbrauch.

Aufgabe der Erfindung ist es, die Restvolumenfiltration zu beschleunigen und somit zu einer schnelleren Filtration zu gelangen, sowie den Energieverbrauch und Gasverbrauch eines Filtationszyklusses zu reduzieren.

Diese Aufgabe wird erfindungsgemäss mit einem Verfahren gelöst, das dadurch gekennzeichnet ist, dass ein Teil der versprühten Flüssigkeit von einem an dem Filterelement vorgesehenen Verteiler aufgefangen und durch eine ringförmige Oeffnung zwischen dem Verteiler und dem Filterelement auf den Filterkuchen geleitet wird.

Ein solches Verfahren hat den Vorteil, dass nunmehr der grösste Teil der versprühten Suspension in einem Durchgang seine Flüssigkeit dosiert an das Filterelement abgibt und diese aus dem Filterbehälter abgeleitet werden kann. Die Suspension fliesst mittels Schwerkraft den Filterkuchen entlang, wobei sich Flüssigkeit und Feststoff in der Regel bereits im oberen Drittel des Filterelementes trennen und somit kein nochmaliges Restvolumen entstehen kann. Anstelle der ringförmigen Oeffnung zwischen Verteiler und Filterelement können im Verteiler selbst Oeffnungen vorgesehen sein.

Gemäss Anspruch 2 ist es zur Durchführung des Verfahrens zweckmässig, einen Verteiler im Bereich der Befestigung des Filterelementes vorzusehen, der nach oben einen konkaven Sammelraum für die versprühte Suspension bildet.

Für ein Filterelement sind gemäss Anspruch 3 wenigstens drei Abstandhalter vorgesehen, welche an einem Sammelrohr befestigt sind. Die Befestigung ist zweckmässig durch Verschweissen vorgenommen.

Es ist gemäss Anspruch 4 zweckmässig, den Rand des Verteilers mit einer Neigung von wenigstens 1°, vorzugsweise 10 bis 20°, insbesondere 15° zu versehen. Eine Neigung von weniger als 15° hat den Nachteil, dass sich zu wenig Flüssigkeit ansammeln kann.

Die Erfindung soll anhand einer Zeichnung und anhand von Beispielen näher erläutert werden.

In der Zeichnung zeigen:

Fig. 1      eine schematische Ansicht der erfindungsgemässen Filteranlage.

Fig. 2      eine Filterkerze im Bereich ihrer Befestigung mit dem erfindungsgemässen Verteiler.

Fig. 3      einen Schnitt durch den Verteiler.

Fig. 4      eine Draufsicht auf den Verteiler.

Fig. 5      einen rechteckigen Verteiler.

Fig. 6      eine geometrische Variante des Verteilers.

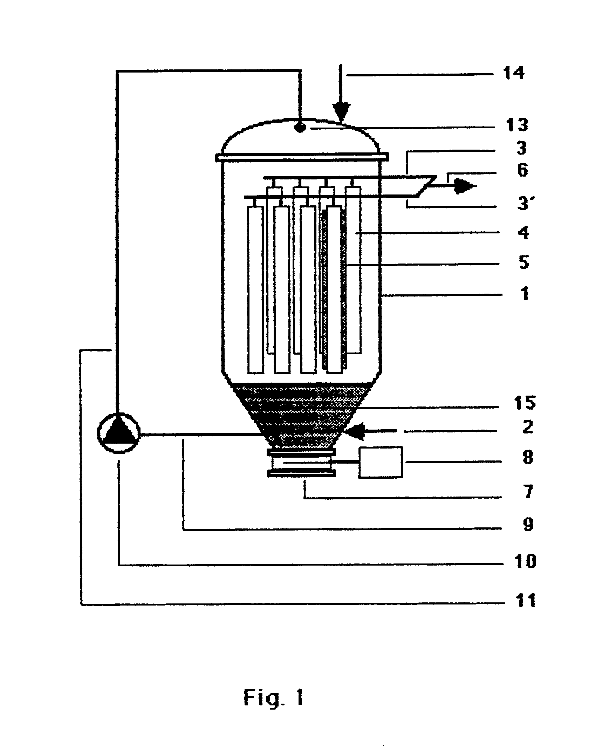

In Fig. 1 ist mit der Bezugsziffer 1 ein Filterbehälter bezeichnet. Der Filterbehälter 1 ist mit einem Zulaufstutzen 2 versehen. Im Filterbehälter 1 sind Sammelrohre 3, 3' vorgesehen, an welchen hängend Filterkerzen 4 angeordnet sind, auf welchen sich während der Filtration ein Filterkuchen 5 aufbaut. Die Sammelrohre 3, 3' werden in einem weiteren Sammelrohr 6 zur gemeinsamen Abfuhr des Filtrats zusammengefasst. Im unteren Teil des Filterbehälters 1 ist ein Schieber 7 mit einem Motor 8 für dessen Antrieb vorgesehen. Eine Saugleitung 9 führt aus einem Restvolumen 15 in unmittelbarer Nähe des Schiebers 7 auf eine Pumpe 10 und über eine Druckleitung 11 auf eine Düse 13. Ein Rohrteil 14 ist mit einem Rohranschluss 14' für Druckgas versehen.

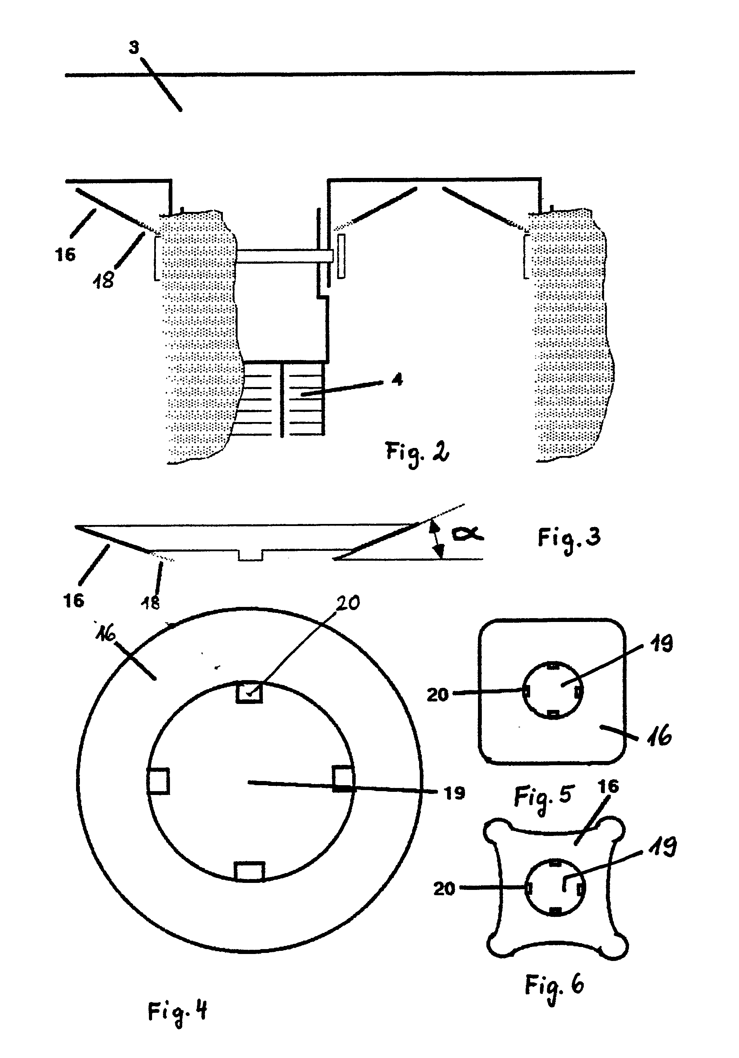

In Fig. 2 ist zwischen einer Befestigung der Filterkerze 4 und dem Sammelrohr 3 ein Verteiler 16 befestigt, der mit der Filterkerze 4 einen Ringraum 18 bildet.

In Fig. 3 ist der Verteiler 16 gezeigt mit einer zentralen Oeffnung 19 und einem Rand, dessen Neigung zwischen 10° und 20°, bevorzugt 15° aufweist.

In Fig. 4 ist der Verteiler 16 in Draufsicht gezeigt mit der zentralen Oeffnung 19. Zur Zentrierung dienen Abstandhalter 20. Der Verteiler 16 kann einen abgerundeten Rand aufweisen.

In Fig. 5 ist ein rechteckiger Verteiler 16 mit abgerundeten Kanten vorgesehen:

Fig. 6 zeigt als Variante eingezogene Kanten zur raumsparenden Anordnung der Filterelemente.

Im Betrieb wird nach einem beendeten Filtrationszyklus die Suspension des Restvolumens 15 mittels der Pumpe 10 über die Saugleitung 9 und die Druckleitung 11 über die Düse 13 versprüht. Die auf diese Weise gleichmässig versprühte Flüssigkeit mit den darin befindlichen Feststoffen sammelt sich auf den Verteilern 16, mit welchen jedes Filterelement 4 versehen ist. Die Suspension fliesst gleichmässig mittels Schwerkraft von den Verteilern 16 durch den Ringspalt 18, dessen Breite je nach Art der zu filtrierenden Suspension variieren kann, über den Filterkuchen 5, wo die Flüssigkeit nach der Filtration über die Sammelrohre 3, 3' abgeleitet wird und der Feststoff sich auf dem Filterkuchen 5 absetzt.

Bezeichnungen

| 1 | Filterbehälter |
|---|---|
| 2 | Zulaufstutzen |
| 3, 3' | Sammelrohre |
| 4 | Filterelement |
| 5 | Filterkuchen |
| 6 | Sammelrohr für Filtrat |
| 7 | Schieber |
| 8 | Motor |
| 9 | Saugleitung |
| 10 | Pumpe |
| 11 | Druckleiting |
| 13 | Düse |
| 14 | Rohranschluss für Druckgas |
| 15 | Restvolumen |
| 16 | Verteiler |
| 17 | Befestigung der Eilterelemente |
| 18 | Ringöffnung |
| 19 | zentrale Oeffnung des Verteilers |
| 20 | Abstandhalter |
| $\alpha$ | Neigung des Randes des Verteilers |

## Patentansprüche

1. Verfahren zur Filtration eines Restvolumens in einem Filterbehälter (1) mit hängend angeordneten Filterelementen (4), wobei die Suspension des Restvolumens (15) mittels einer Düse (13) im oberen Teil eines Filterbehälters (1) versprüht wird, dadurch gekennzeichnet, dass ein Teil der versprühten Suspension des Restvolumens (15) von einem an dem Filterelement (4) vorgesehenen Verteiler (16) aufgefangen und durch eine ringförmige Oeffnung (18) zwischen dem Verteiler (16) und dem Filterelement (4) auf den Filterkuchen (5) geleitet wird.

2. Filterelement zur Durchführung des Verfahrens nach Anspruch 1, dadurch gekennzeichnet, dass das Filterelement (4) im Bereich der Befestigung (17) mit zur Düse (13) konkavem Verteiler (16) umgeben ist.

3. Filterelement nach Anspruch 2, dadurch gekennzeichnet, dass wenigstens drei Abstandhalter (20) vorgesehen sind.

4. Filterelement nach den Ansprüchen 2 und 3, dadurch gekennzeichnet, dass die Neigung ($\alpha$) des Verteilers (16) 1°-60° beträgt.

5. Filterelement nach den Ansprüchen 2 bis 4, dadurch gekennzeichnet, dass der Verteiler (16) tellerförmig ausgebildet ist.

6. Filterelement nach den Ansprüchen 2 bis 4, dadurch gekennzeichnet, dass der Verteiler (16) wannenförmig ist.

## Claims

1. A method for the filtration of a residual volume in a filter container (1) with filter elements (4) in suspended arrangement, in which the suspension of the residual volume (15) is sprayed by means of a nozzle(13) in the upper part of a filter container (1), characterised in that a portion of the sprayed suspension of the residual volume (15) is collected by a distributor (16) provided on the filter element (4) and is conducted through an annular opening (18) between the distributor (16) and the filter element (4) onto the filter cake (5).

2. A filter element to carry out the method according to Claim 1, characterised in that the filter element (4) in the region of the attachment (17) is surrounded by a distributor (16) which is concave to the nozzle (13).

3. A filter element according to Claim 2, characterised in that at least three spacers (20) are provided.

4. A filter element according to Claims 2 and 3, characterised in that the inclination ( $\alpha$ ) of the distributor (16) is 1° - 60°.

5. A filter element according to Claims 2 to 4, characterised in that the distributor (16) is constructed so as to be plate-shaped.

6. A filter element according to Claims 2 to 4, characterised in that the distributor (16) is constructed so as to be tub-shaped.

## Revendications

1. Procédé pour filtrer un volume résiduel dans un récipient de filtration (1) comportant des éléments filtrants (4) suspendus, la suspension du volume résiduel (15) étant pulvérisée à l'aide d'une buse (13) dans la partie supérieure d'un récipient de filtration (1), caractérisé en ce qu'une partie de la suspension du volume résiduel (15) pulvérisée est recueillie par un distributeur (16) prévu au niveau de l'élément filtrant (4) et est amenée, à travers une ouverture annulaire (18) prévue entre le distributeur (16) et l'élément filtrant (4), vers le gâteau de filtration (5).

2. Elément filtrant pour mettre en oeuvre le procédé selon la revendication 1, caractérisé en ce que l'élément filtrant (4) est entouré, dans la zone de la fixation (17), d'un distributeur (16) concave en direction de la buse (13).

3. Elément filtrant selon la revendication 2, caractérisé en ce qu'il est prévu au moins trois écarteurs (20).

4. Elément filtrant selon les revendications 2 et 3, caractérisé en ce que l'inclinaison ($\alpha$) du distributeur (16) est de 1° à 60°.

5. Elément filtrant selon les revendications 2 à 4, caractérisé en ce que le distributeur (16) a une configuration en forme d'assiette.

6. Elément filtrant selon les revendications 2 à 4, caractérisé en ce que le distributeur (16) est en forme de cuvette.

14
13
3
6
3´
4
5
1
15
2
8
7
9
10
11

Fig. 1

3

Fig. 2

4

16

18

Fig. 3

α

16   18

20

16

19

Fig. 4

19

20

16

Fig. 5

16

19

20

Fig. 6